# EUROPEAN PATENT APPLICATION

(11) **EP 2 518 537 A1**
(43) Date of publication of application: **31.10.2012**
(21) Application number: 10839257.2
(22) Date of filing: 15.12.2010
(51) Int. Cl.: G02B 5/08, F24J 2/10

(54) **FILM MIRROR AND PROCESS FOR PRODUCTION THEREOF, AND REFLECTION DEVICE FOR GENERATION OF SOLAR POWER**

(30) Priority: 21.12.2009 JP 2009288969
(71) Applicant: Konica Minolta Opto, Inc., Hachioji-shi, Tokyo 192-8505 (JP)
(72) Inventor: KUMAGAI Takenori, Hachioji-shi Tokyo 192-8505 (JP)
(74) Representative: Henkel, Breuer & Partner
(86) International application number: PCT/JP2010/072532
(87) International publication number: WO 2011/078024

(57) **Abstract**

Disclosed is a film mirror which is lightweight and flexible, can be produced at a reduced cost, can have an enlarged surface, can be produced on a large scale, has long-lasting durability even under severe environments, has excellent stain-proof properties, and can keep good normal reflectance to solar light for a long period. The film mirror comprises a resin base and a silver reflective layer arranged on the resin base, and is characterized in that a photocatalyst-containing layer is provided as the outermost layer of the film mirror and a corrosion inhibitor layer for preventing the corrosion of silver is provided adjacent to the light-reflecting side of the silver reflective layer.

## Description

### TECHNICAL FIELD

The present invention relates to a film mirror exhibiting weather resistance, and having excellent regular reflectance to solar heat, a method of manufacturing the film mirror, and a reflection device for solar heat power generation equipped with the film mirror.

### BACKGROUND

In recent years, as alternative energy by which fossil fuel energy such as petroleum, natural gas or the like might be replaced, natural energy has been studied to practically use it. Above all, attention has been focused on solar energy in large energy quantity, which is stable as alternative energy by which the fossil fuel is to be replaced.

However, the solar energy is to be dominant alternative energy, but in view of utilization thereof, there would appear a problem such that (1) energy density of solar energy is low, and (2) the solar energy is difficult to be stored and transported.

Presently, research and development of solar cells have been actively done, and sunlight use efficiency is to be increased, but recovery efficiency thereof has not yet reached a sufficient level.

As another technique of converting sunlight into energy, attention has been focused on solar heat power generation by which heat obtained by collecting sunlight is power-generated as a medium. It appears that not only electric power is possible to be generated ar any time during the day and night by using this technique, but also in the long view, sunlight can be efficiently utilized since electric power generation efficiency thereof is higher than that of a solar cell.

Presently, glass mirrors each utilized as a substrate made of glass are used as reflection mirrors. The glass mirror is highly durable to the environment, but in contrast, it produces problems such as large weight, large volume, large transportation cost, difficult installation, easy breakage and so forth. Therefore, attention has been focused on a film mirror as aproduct in which a film is used for a mirror can be realized by using a mirror made of a resin by which glass is replaced.

When using a film mirror outside, a problem which is different from that of the glass mirror appears. In the case of glass minors, they are hardly deteriorated by water vapor and UV radiation which are present in the atmosphere, since the surface of the glass mirror is sealed with glass. However, in the case of film mirrors, there appears a problem such that not only a resin layer is deteriorated by UV radiation since the surface is sealed by a thin layer, but also a functional layer in the film mirror is deteriorated by external factors. As a film minor to be presently utilized outside, side mirrors for a vehicle are exemplified, but in this case, an aluminum-evaporated layer is used as this reflection layer. A specific protective layer does not have to be used since aluminum is metal exhibiting more difficulty to be degraded than that of silver, but there appears a problem such that sharp reflection images are not obtained because of an all-optical reflectance of 85% or less. For this reason, demanded is development of film minors each having high reflectance, which is not degraded even though using it outside for a long period of time.

Silver is applied onto the reflecting plane for a mirror having high reflectance. Silver has highest reflectance among metals, and has 10% higher reflectance than that of aluminum. However, it becomes problematic that since silver is metal which is easy to undergo corrosion · tarnishing, it is deteriorated under the extreme environment via influence of UV radiation, water vapor, hydrogen sulfide or the like. Therefore, when applying silver onto the reflecting plane of a film mirror, a greater sealing effect is desired to be produced. A mirror in which silver is used for a reflection layer, which is usable outside, is disclosed in Patent Document 1. In this document, it appears that silver is evaporated onto a resin substrate, and a 2.4 mm thick acrylic layer is used as a protective layer for silver, but a sufficient corrosion-inhibiting effect for silver is not produced since water vapor and oxygen in the atmosphere can not be completely sealed even though using such a thick acrylic resin as a protective layer. On the other hand, it is disclosed in Patent Document 2 that a corrosion inhibitor to silver is provided to silver having been evaporated on a resin substrate to prevent silver from corrosion. Also in this case, it can not be durable to the extreme environment outside, since protection · sealing of the film mirror surface is insufficient In cases where an organic substance exhibiting a UV absorption property is applied onto the reflection surface of the film mirror, it would appear that degradation caused by exposing it to UV radiation is accelerated.

On the other hand, in cases where a film mirror is used outside, there appears a problem such that high reflectance an not be maintained for a long duration since adhesion of contamination to the film surface becomes pronounced over time. Specifically when the film mirror is used for solar heat power generation, it would appear that not only deterioration of a film is to be suppressed, but also adhesion of contamination to the film surface is to be inhibited, since slight fall in reflectance largely influences heat generation efficiency. No antifouling property but a corrosion-inhibiting function for silver is seen in Patent Document 1 and Patent Document 2. As a mirror for which an antifouling property is provided, a mirror of which a photocatalyst is provided on the surface is disclosed in Patent Document 3, but the mirror exhibits no high reflectance since silver is not provided on the reflection surface. For this reason, a film mirror exhibiting high reflectance together with weather resistance, on which no contamination is to be attached even though using for a long duration has not been proposed so far.

### PRIOR ART DOCUMENT

### PATIENT DOCUMENT

Patent Document 1: Published Japanese translation of PCT international Publication No. 2009-520174
Patent Document 2: Japanese Patent O. P. I. (Open to Public Inspection) Publication No. 10-48407
Patent Document 3: Japanese Patent O. P. I. Publication No. 2000-17620

### DISCLOSURE OF THE INVENTION

### PROBLEMS TO BE SOLVED BY THE INVENTION

Herein, it is a principal object of the present invention is to provide a film mirror exhibiting durability under the extreme environment for a long duration together with an excellent antifouling property, which can be large-area-produced and mass-produced at low manufacturing cost, and exhibits excellent regular reflectance to sunlight, maintained for a long period of time; and also to provide a method of manufacturing the film mirror and a reflection device for solar heat power generation equipped with the film minor.

### MEANS TO SOLVE THE PROBLEMS

The above-described problems concerning the present invention are solved by the following embodiments.

That is, in the first embodiment of the present invention, provided is a film mirror comprising a resin substrate and provided thereon, a silver reflection layer, a corrosion inhibitor layer and an outermost layer, wherein the corrosion inhibitor layer adjacent to the silver reflection layer is provided on a light reflection side of the silver reflection layer to prevent silver from corrosion, and the outermost layer comprises a photocatalyst.

It is preferable that a corrosion inhibitor in the corrosion inhibitor layer is a corrosion inhibitor possessing an adsorptive group to silver, or the corrosion inhibitor is an antioxidant.

It is preferable that the film mirror possesses a metal layer adjacent to the silver reflection layer, provided between the resin substrate and the silver reflection layer, wherein the metal layer comprises copper or zinc as metal exhibiting higher ionization tendency than that of silver.

It is preferable that the film mirror possesses an adhesion layer provided between the resin substrate and the silver reflection layer, or between the resin substrate and the metal layer to maintain material-to-material adhesion.

It is preferable that the film mirror possesses a gas barrier layer provided on an upper side of the corrosion inhibitor layer.

It is preferable that the film mirror possesses a UV absorbent layer provided on an upper side of the corrosion inhibitor layer, or possesses constituting layers provided on the resin substrate wherein any one of the constituting layers comprises a UV absorbent.

It is preferable that as to the film mirror, an entire layer comprising the resin substrate has a total thickness of 75 -250 µm.

According to the second embodiment of the present invention, provided is a method of manufacturing the film mirror in the first embodiment, comprising the step of forming the silver reflection layer via evaporation of silver.

According to the third embodiment of the present invention, provided is a reflection device for solar heat power generation, comprising the film mirror in the first embodiment or a film mirror obtained by the method in the second embodiment, wherein the reflection device comprises a metal substrate and attached thereon, the film mirror provided via an adhesion layer coated on a surface of the resin substrate on a side where the silver reflection layer is present, or another adhesion layer coated on an opposite surface of the resin substrate.

A photocatalyst hydrophilizes its surface by absorbing UV radiation, and has an action in which organic substances attached onto the surface are broken down. For this reason, when a layer containing a photocatalyst (hereinafter, referred to also as a photocatalyst layer) is provided as an outermost layer, it can be avoided by the surface hydrophilization action that the mirror is steamed up, and contaminations attached onto the surface can be broken down and rinsed off. It appears that other antifouling layers are used, but for the reason why a photocatalyst is used in the present invention, attention has been focused on the fact that the photocatalyst not only produces a high cleaning effect, but also has a function in which the photocatalyst absorbs UV radiation. In cases where a corrosion inhibitor is used as it is for the mirror, the corrosion inhibitor made of an organic substance, and a substrate are aging-deteriorated with UV radiation, and can not possibly maintain high reflectance, but degradation of a corrosion inhibitor layer can be suppressed by shielding UV radiation via application of a photocatalyst It would appear that even though a large amount of a UV absorbent is added in order to shield UV radiation by only using a UC absorbent, light transmittance is reduced, and the UV absorbent is bled out via aging. Therefore, when the surface of a film mirror is cleaned with a photocatalyst, and UV radiation is absorbed, durability of the film mirror can be maintained. Consequently, a film mirror usable for a long duration was able to be developed.

### EFFECT OF THE INVENTION

In the present invention, provided can be a lightweight and flexible film mirror exhibiting excellent reflectance to sunlight for a long duration together with excellent weather resistance and an excellent antifouling property, and can be large-area-produced and mass-produced at low manufacturing cost in addition to inhibition of a decline of regular reflectance caused by degradation of a silver layer as a reflection layer, and also provided can be a method of manufacturing the film mirror.

### BRIEF DESCRIPTION OF THE DRAWING

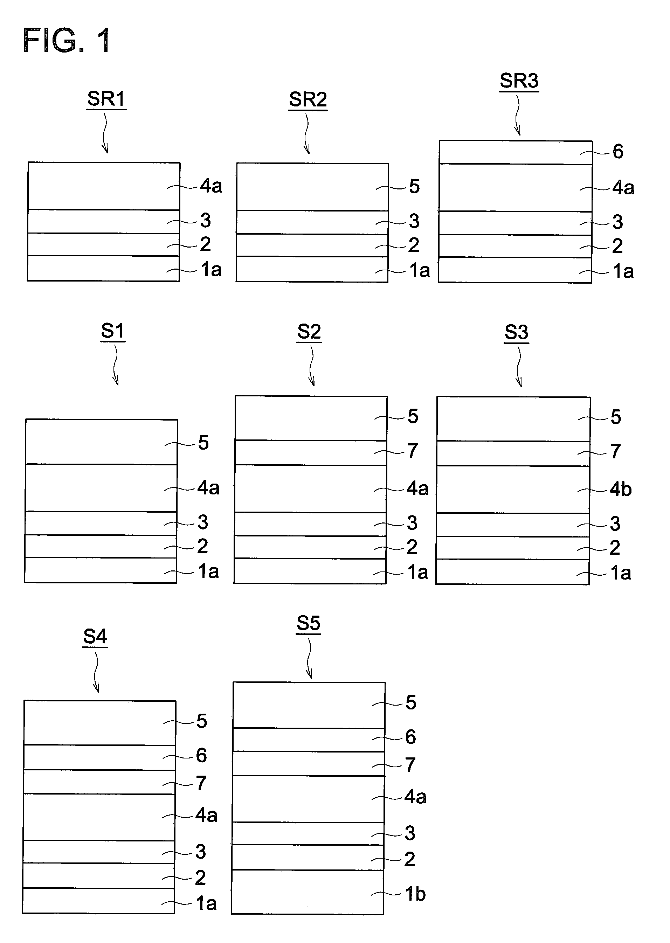

Fig.1 is a drawing showing schematic layer structures possessed by samples corresponding to Examples of the present invention, and Comparative examples thereof.

### DESCRIPTION OF PREFERRED EMBODIMENTS

It is a feature that a film mirror in an embodiment of the present invention possesses a resin substrate and provided thereon, at least a silver reflection layer, a corrosion inhibitor layer and a photocatalyst layer as constituting layers. The silver reflection layer is a reflection layer (mirror) containing silver. The corrosion inhibitor layer is a layer to prevent silver from corrosion, and the corrosion inhibitor layer adjacent to the silver reflection layer is provided on the light reflection side of the silver reflection layer. The photocatalyst layer is a layer containing a photocatalyst, and is provided as an outer most layer (top layer). Such a structural feature is a main technical feature common to the invention of any one of Claims 1-10.

According to an embodiment of the present invention, since a photocatalyst layer as an outermost layer not only produces an antifouling property on the film surface, but also exhibits UV absorbing function, corrosion can be inhibited against UV radiation, and degradation of a resin substrate can be avoided. Therefore, since degradation of each layer in the film mirror can be suppressed even in the extreme environment, film mirrors which can maintain high reflectance over a long period of time can be developed.

As an embodiment of the present invention, it is preferable in view of generation of the effect of the present invention that the corrosion inhibitor is a corrosion inhibitor possessing an adsorptive group with respect to silver. Further, it is also preferable that the corrosion inhibitor is an antioxidant.

Further, it is a preferred embodiment that a metal layer containing metal exhibiting higher ionization tendency than that of silver (copper, zinc or the like) is provided between a resin substrate and a silver reflection layer, and the metal layer is adjacent to the silver reflection layer.

In the present invention, preferable is a configuration in which an adhesion layer to enhance adhesion of a resin substrate to a metal layer is provided between the resin substrate and the metal layer. In cases where no metal layer is formed, the adhesion layer may be also provided between a resin substrate and a silver reflection layer.

Preferable is a configuration in which a gas barrier layer is provided on the upper side of the corrosion inhibitor layer. It is preferable that a UV absorbent layer is provided on the upper side of the corrosion inhibitor layer, or a UV absorbent is contained in any one of constituting layers provided on the resin substrate.

In the present invention, it is preferable that an entire layer including the resin substrate has a total thickness of 75 - 250 µm.

A method of manufacturing the film mirror of the present invention is a manufacturing method possessing the step of forming the silver reflection layer via evaporation of silver.

The present invention provides an embodiment in which a 10 µm or thicker resin substrate is provided between the sunlight incidence side and the silver reflection layer, but a front surface mirror provides an embodiment in which a 10 µm or thicker resin substrate is not provided between the sunlight incidence side and the silver reflection layer. The present invention satisfies any of layer configurations of a back surface mirror and a front surface mirror.

Next, the present invention and its constituting elements, and the structure ·embodiment to implement the present invention will be described in detail. (1) Outline of configuration of film mirror

It is a feature that a film mirror of the present invention possesses a resin substrate and provided thereon, as constituting layers, at least a silver reflection layer, a corrosion inhibitor layer being adjacent to silver, a photocatalyst layer as an outermost layer, wherein the corrosion inhibitor layer prevents silver from corrosion. It is also a preferred embodiment that specific functional layers such as a gas barrier layer, a UV absorbent layer and so forth, in addition to the silver reflection layer, the corrosion inhibitor layer and the photocatalyst layer are provided as constituting layers.

### (2) Resin substrate

As a resin substrate relating to the present invention, usable are conventionally known various resin films. Examples thereof include cellulose ester based films, polyester based films, polycarbonate based films, polyarylate based films, polysulfon (including polyethersulfon) based films, polyester films such as a polyethylene terephthalate film, a polyethylene naphthalate film and so forth, a polyethylene film, a polypropylene film, cellophane, a cellulose diacetate film, a cellulose triacetate film, a cellulose acetate propionate film, a cellulose acetate butyrate film, polyvinylidene chloride, a polyvinyl alcohol film, an ethylene vinyl alcohol film, syndiotactic polystyrene based films, a polycarbonate film, a norbornene film, a polymethyl pentene film, a polyether ketone film, a polyether ketone imide film a polyamide film, a fluorine resin film, a nylon film, a polymethyl metracrylate film, a polyacrylic film, and so forth. Of these, polycarbonate based films, polyester based films, norbornene based films, and cellulose ester based films are preferable.

Specifically, polyester based films or cellulose ester based films are preferably used, and a film prepared as a melt cast film or a film prepared as a solution-cast film may be allowed to be used.

The resin substrate is preferably adjusted to have a suitable thickness, depending on kinds of the resin, an objective and so forth. For example, the thickness is generally in the range of 10 - 300 µm; preferably in the range of 20 - 200 µm; and more preferable in the range of 30 -100 µm.

### (3) Adhesion layer

An adhesion layer is preferably provided between a resin substrate and a silver reflection layer, or between the resin substrate and a metal layer to maintain material-to-material adhesion.

The adhesion layer is not specifically limited, as long as it has a function of enhancing adhesiveness between the metal layer and the resin substrate. Accordingly, the adhesion layer should exhibit adhesiveness to attach a metal reflection layer onto the resin substrate, heat resistance endurable to heat when forming the silver reflection layer via a vacuum evaporation method or the like, and smooth flatness to extract high reflection performance originally possessed by the silver reflection layer.

The adhesion layer preferably has a thickness of 0.01 - 3 µm, and more preferably has a thickness of 0.1 - 1 µm in view of adhesiveness, smooth flatness, reflectance of a reflection material and so forth.

In cases where the adhesion layer is made of a resin, the resin is not specifically limited as long as it satisfies the conditions of the above-described adhesion, heat resistance and smooth fatness. A polyester based resin, an acrylate based resin, a melamine based resin, an epoxy based resin, a polyamide resin, a vinyl chloride based resin, a vinyl chloride-vinyl acetate copolymer based resin can be used singly, or in mixture of these resins. A resin in which a polyester based resin and a melamine based resin are mixed is preferable in view of weather resistance. Further, it is more preferable to make it to be a thermosetting resin in which a hardener such as isocyanate or the like is mixed. As a method of forming an adhesion layer, usable is a conventionally known coating method such as a gravure coating method, a reverse coating method, a die coating method or the like. In cases where the adhesion layer is made of metal oxide, silicon oxide, aluminum oxide, silicon nitride, aluminum nitride, lanthanum oxide, lanthanum nitride or the like can be film-formed by each of various vacuum film-formation method. Examples thereof include a resistance heating system vacuum evaporation method, an electron beam heating system vacuum evaporation method, an ion plating method, an ion beam assisted vacuum evaporation method, a sputtering method and so forth.

### (4) Silver reflection layer

Any of a wet process method and a dry process method is usable as a method of forming a silver reflection layer relating to the present invention.

A wet process method is collectively designated as a plating method, and is a method by which metal is precipitated from a solution to form a film. Specific example thereof include silver mirror reaction and so forth.

On the other hand, a dry process method is collectively designated as a vacuum deposition method, and examples thereof include a resistance heating system vacuum evaporation method, an electron beam heating system vacuum evaporation method, an ion plating method, an ion beam assisted vacuum evaporation method, a sputtering method and so forth. Specifically, an evaporation method by which film formation can be continuously conducted via a rou-to-roll system is preferably used for the present invention. That is, a manufacturing method by which a film mirror of the present invention is prepared is preferably the method possessing the step of forming the silver reflection layer via evaporation of silver.

The silver reflection layer preferably has a thickness of 10 - 200 nm, and more preferably has a thickness of 30-150 nm.

In the present invention, the silver reflection layer may be placed on the light incidence side, or on the opposite side with respect to a resin substrate (hereinafter, referred to also as a support), but in order to suppress degradation of a resin caused by light, it is preferable that it is placed on the light incidence side since the support is made of a resin.

### (5) Corrosion inhibition layer

The corrosion inhibition layer relating to the present invention is provided on the light incidence side of the silver reflection layer, and contains a corrosion inhibitor to prevent silver from corrosion. The corrosion inhibition layer may be present on the upper side or on the opposite side of the silver reflection layer, but the silver reflection layer is preferably placed on the upper side of the silver reflection layer since the silver reflection layer is preferably placed on the light incidence side with respect to a support.

As a corrosion inhibitor in a silver reflection layer used in a film mirror of the present invention, preferably used is a corrosion inhibitor containing an adsorptive group to prevent silver from corrosion, and also used is an antioxidant.

Herein, "corrosion" means a phenomenon in which metal (silver) is chemically or electrochemically eroded by an environmental substrate enclosing the metal (silver), or is degraded in material quality (refer to JIS Z0103-2004).

As to a film mirror of the present invention the foregoing adhesion layer contains an antioxidant, and the corrosion inhibitor layer preferably contains a corrosion inhibitor possessing an adsorptive group to silver.

In addition, as to a content of the corrosion inhibitor, the optimum content is different, depending on a compound to be used, but a content of 0.1-1.0/m² is conventionally preferable.

### (5. 1) Corrosion inhibitor possessing adsorptive group to silver

The corrosion inhibitor possessing an adsorptive group to silver should be selected from the group consisting of amines and their derivatives, compounds each possessing a pyrrole ring compounds each possessing a triazole ring, compounds each possessing a pirazole ring, compounds each possessing a thiazole ring, compounds each possessing an imidazole ring, copper chelate compounds, thioureas, compounds each possessing a mercapto group, and at least one of naphthalane-based kinds or a mixture thereof.

Examples of amines and their derivatives include methyl amine, lauryl amine, tri-n-butyl amine, o-toluidine, diphenyl amine, ethylene diamine, diethylene triamine, triethylene tetramine, tetraethylene pentamine, monoethanol amine, diethanol amine, triethanol amine, 2N-dunethylethanol amine, 2-amino-2-methyl-1, 3-propane diol, acetoamide, acrylamide, benzamide, p-ethoxychrysoidine, dicyclohexyl ammonium nitrite, dicyclohexyl ammonium salicylate, monoethanol amine benzoate, dicyclohexyl ammonium benzoate, diisopropyl ammonium benzoate, diisopropyl ammonium nitrite, cyclohexyl amine carbamate, nitronaphthalene ammonium nitrite, cyclohexyl amine benzoate, dicyclohexyl ammonium cyclohexane carboxylate, cyclohexyl amine cyclohexane carboxylate, dicyclohexyl ammonium acrylate, cyclohexyl amine acrylate and so forth, or mixtures thereof

Examples of compounds each possessing a pyrrole ring include N-butyl-2, 5-dimethyl pyrrole, N-phenyl-2, 5-methyl pirrole, N-phenyl-3 -formyl-2, 5-dimethyl pirrole, N-phenyl-3, 4-diformyl-2, 5-dimethyl pirrole and so forth, or mixtures thereof.

Examples of compounds each possessing a triazole ring include 1, 2, 3-triazole;1,2,4-triazole; 3-mercapto-1, 2, 4-triazole; 3-hydroxy-1, 2, 4-triazole; 3-ethyl-1, 2, 4-thiazole; methyl-1, 2, 4-triazole; 1-mehyl-3-mercapto-1, 2, 4-triazole; 4-methyl-1, 2, 3-triazole; benzotriazole; tlyltriazole;1-hydroxy benzotriazole, 4, 5, 6, 7-tetrahydrotriazole; 3-amino-1, 2, 4-triazole; 3-amino-5-methyl-1, 2,4-triazole; carboxybenzotiazole; 2-(2'-hydroxy-5'-methylphenyl) benzotriazole; 2-(2'-hydroxy-5'-tert-butylphenyl) benzotriazole; 2-(2'-hydroxy-3', 5'-di-tert-butylphenyl) benzotriazole; 2-(2'-hydroxy-4-octoxyphenyl) benzotriazole and so forth; or mixtures thereof.

Examples of compounds each possessing a pirazole ring include pirazole, pyrazoline, pyrazolone, pyrazolidine, pyrazolidone, 3, 5-dimethyl pyrazole, 3-methyl-5-hydroxy pyrazole, 4-amino pyrazole and so forth, or mixtures thereof.

Examples of compounds each possessing a thiazole ring include thiazole, thiazoline, thiazolone, thiazolidine, thiazolidone, isothiazole, benzothiazole, 2-N, N-diethylthiobenzothiazole, P-dimethylaminobenzal rhodanine, 2-mercaptobenzothiazole and so forth, or mixtures thereof.

Examples of compounds each possessing an imidazole ring include imidazole, histidine, 2-heptadecyl imidazole, 2-methyl imidazole, 2-ethyl-4-methyl imidazole, 2-phenyl imidazole, 2-undecyl imidazole, 1-benzyl-2-methyl imidazole, 2-phenyl-4-methyl imidazole, 1-cyanoethyl-2-methyl imidazole, 1-cyanoethyl-2-phenyl imidazole, 1-cyanoethyl-2-ethyl-4-methyl imidazole, 1-cyanoethyl-2-undecyl imidazole, 2-phenyl-4-methyl-5-hydromethyl imidazole, 2-phenyl-4,5-dihydroxmethy imidazole, 4-formyl imidazole, 2-methyl-4-formyl imidazole, 2-phenyl-4-formyl imidazole, 4-methyl-5-formyl imidazole, 2-ethyl-4-methyl-5-formyl imidazole, 2-phenyl-4-methyl-4-formyl imidazole, 2-mercaptobenzimidazole and so forth, or mixtures thereof.

Examples of compounds each possessing an indazole ring include 4-chloroindazole, 4-nitroindazole, 5-nitroindazole, 4-chloro-5-nitroindazole and so forth, or mixtures thereof

Examples of copper chelate compounds include acetylacetone copper, ethylene diamine copper, copper phthalocyanine, ethylene famine tetraacetate copper, copper hydroxyquinoline and so forth, or mixtures thereof.

Examples ofthioureas include thiourea, guanylthiourea and so forth, or mixtures thereof.

Examples of compounds each possessing a mercapto group in addition to materials having been already described above include a mercaptoacetic acid, thiophenol, 1,2-ethane diol, 3-mercapto-1, 2,4-triazole, 1-methyl-3-mercapto-1, 2, triazole, 2-mercaptobenzothiazole, 2-2-mercaptobenzimidazole, glycol dimercaptoacetate, 3-mercaptopropyltrimethoxy silane and so forth, or mixtures thereof.

Examples of the naphthalane-based include thionalide and so forth.

### (5. 2) Antioxidant

As a corrosion inhibitor for a silver reflection layer used for a film mirror relating to the present invention, also usable is an antioxidant.

As the antioxidant, preferable used are phenol based antioxidants, thiol based antioxidants and phosphite based antioxidants.

Examples ofphenol based antioxidants include 1,1, 3-tris (2-methyl-4-hydroxy-5-t-butylphenyl) butane, 2, 2'-methylene bis (4-ethyl-6-t-butylphenol), tetrakis-{methylene-3-(3', 5'-di-t-butyl-4'hydroxyphenyl) propionate} methane, 2, 6-di-t-butyl-p-cresol, 4, 4'-thiobis (3-methyl-6-t-butylphenol), 4, 4'-Butylidene bis (3-methyl-6-t-butylphenol), 1, 3, 5-tris (3', 5'-di-t-butyl-4'-hydroxybenzyl)-S-triazine-2, 4, 6-(1H, 3H, 5H) trione, stearyl-β-(3,5-di-t-butyl-4-hydroxyphenyl) propionate, triethylene glycol bis [3-(3-t-butyl-5-methyl-4-hydroxyphenyl) propionate], 3,9-bis [1,1-dimethyl-2-[β-(3-t-butyl-4-hydroxy-5-methylphenyl)propionyloxy] ethyl] 2, 4, 8,10-tetraoxaspiro [5, 5] undecane,1,3,5-trimethyl-2,4,6-tris (3, 5-di-t-butyl-4-hydroxybenzyl) benzene, and so forth Specifically, the phenol based antioxidants each preferably have a molecular weight of 550 or more.

Examples ofthiol based antioxidants include distearyl-3, 3'-thiodipropionate, pentaerythritol-tetrakis-(β-lauryl-thiopropionate), and so forth.

Examples of phosphite based antioxidants include tris (2, 4-di-t-butylphenyl) phosphite, distearyl pentaerythritol diphosphite, di (2, 6-di-t-butylphenyl) pentaerytbritol diphosphate, bis-(2,6-dit-butylphenyl) pentaerythritol diphosphite, tetrakis (2, 4-di-t-butylphenyl) 4, 4'-biphenylene-diphosphonite, 2, 2'-methylene bis (4, 6-di-t-butylphenyl) octylphosphite, and so forth.

In addition, in the present invention, the above-described antioxidant and the following light stabilizer can be used in combination.

Examples of hindered amine based light stabilizers include bis (2, 2, 6, 6-tetramethyl-4-piperidyl) sebacate, bis (1, 2, 2, 6, 6 pentamethyl-4-piperidyl) sebacate, bis (1, 2, 2, 6, 6-pentamethyl-4-piperidyl)-2-(3,5-di-t-butyl-hydroxybendyl)-2-n-butylmalonate, 1-mathly-8-(1,2, 2, 6, 6-pentamethyl-4-piperidyl) sebacate, 1-[2-{3-(3,5-di-t-butyl-4-hydroxyphenyl) propionyloxy}-2. 2. 6, 6-tetramethyl piperidine, 4-benzoyloxy-2,2,6,6-tetramethyl piperidine, tetrakis (2, 2, 6, 6-tetramethyl-4-piperidyl)-1,2,3,4-butane-tetracarboxylate, triethylene diamine, 8-acetyl-3-dodecyl-7, 7, 9, 9-tetramethyl-1,3,8-triazaspiro [4,5] decane-2,4-dione, and so forth.

As nickel based UV radiation stabilizer in addition to those described above, also usable are {2,2'-thiobis (4-t-octylphenolate)}-2-ethylhexyl amine nickel (II), nickel complex-3,5-di-t butyl-4-hydroxybenzyl phosphoric acid monoethylate, nickel-dibutyl-dithiocarbamate, and so forth.

Specifically, the hindered amine based light stabilizers are preferably hindered amine based light stabilizers each containing only tertiary amine, and preferable examples thereof include bis (1, 2, 2, 6,6-pentamethyl-4-piperidyl)-sebacate, bis (1,2,2,6,6-pentamethyl-4-piperidyl)-2-(3,5-di-t-butyl-4-hydroxybenzyl)-2-n-butylmalonate, or a condensate of 1, 2, 2, 6, 6-pentamethyl-4-piperidinol /tridecyl alcohol and 1,2,3,4-butane tetracarboxylic acid.

### (6) Layer containing photocatalyst

In the present invention, a layer containing a photocatalyst (photocatalyst layer) is provided as an outermost layer.

The photocatalyst in the present invention is referred to as a material in which electrons in the valence band are excited via exposure to light having larger energy than an energy gap between a crystalline conduction band and a valence band to produce conduction electrons and holes. Usable examples thereof include anatase type titanium dioxide, rutile type titanium dioxide, zinc oxide, tin oxide, niobium oxide, tungsten oxide, strontium titanate and so forth. Further, titanium oxide is generally in the form of a spherical particle, but titanium oxide particles each in the form of a sheet (titania nanosheet) can be prepared via calcination at a certain formulation. In this case, not only higher photocatalytic activity together with a hydrophilic effect can be obtained at a thinner layer, but also adhesion to the lower layer becomes enhanced. For this reason, a binder content can be reduced, whereby the film hardness is increased. Therefore, as a more preferred embodiment, a titania nanosheet may be used.

The photocatalyst layer preferably has a film thickness of 400 nm or less. With this, since diffuse reflection of light can be suppressed, transparency is improved. More preferable is a film thickness of 100 nm or less. In contrast, since the thicker the film thickness is, the higher the UV absorptive capacity, and preferable is a thickness of 50 - 400 nm, and more preferable is a thickness of 100-300 nm.

The above-described photocatalyst layer preferably has no large refractive index relative to the lower layer. The surface layer may be preferably allowed to have a refractive index of 3 or less, and more preferably allowed to have a refractive index of 2 or less. In this case, light reflection can be suppressed at the interface between a substrate and a surface layer, and at the interface between the surface layer and air. In order to make the refractive index of the surface layer to be 2 or less, a material having a refractive index of 2 or less can be used as a catalyst, or the particle size of the photocatalyst, the particle diameter and so forth can be controlled to vary the refractive index. Tin oxide having a refractive index of 1.9 can be utilized as a photocatalyst having a refractive index of 2 or less. Anatase type titanium dioxide exhibiting photocatalytic activity is more preferably provided, but since it has a high refractive index, those in which particle size, a particle diameter or the like has been controlled should be used in some cases.

When a slight amount of platinum group metal such as Pt, Pd, Ru, Rh, Ir, Os or the like is added into the above-described photocatalyst layer, photocatalytic activity is increasingly raised, whereby organics decomposition action is improved.

Next, a method of forming a photocatalyst layer will be described

A method of anatase type titanium dioxide exhibiting photocatalytic activity will be specifically described.

In cases where a surface layer is made from only a photocatalyst, there provided three methods such as a sol-coating calcination method, an organic titanate method and a vacuum film formation method. Further, in cases where a binder layer made from a photocatalyst and an inorganic material is formed, there provided four methods such as a sol-coating calcination method, an organic titanate method, a tetrafunctional silane method and spray coating.

### (6.1) Sol-coating calcination method

In the sol-coating calcination method, anatase type titanium dioxide sol is coated on the surface of a substrate by a commonly known coating method such as a gravure coating method, a reverse coating method, a die coating method or the like, followed by calcinations.

### (6.2) Organic titanate method

In the organic titanate method, after a hydrolysis inhibitor (hydrochloric acid, ethylamine or the like) is added into an organic titanate such as titanium alkoxide (tetraethoxy titanium, tetramethoxy titanium, tetrapropoxy titanium, tetrabutoxy titanium and so forth), titanium acetate, titanium chelate or the like, and diluted with a non-aqueous solvent such as alcohol (ethanol, propanol, butanol or the like), hydrolysis is partially or completely accelerated, and the resulting mixture is subsequently coated by a commonly known coating method such as a gravure coating method, a reverse coating method, a die coating method or the like, followed by drying. Titanium hydroxide is produced by completing hydrolysis of the organic titanate, and the titanium hydroxide is subjected to dehydrocondensation polymerization to form an amorphous type titanium oxide layer or the surface of a substrate. Then, the resulting is subjected to calcination at a temperature higher than crystallization temperature of the anatase to phase-change the amorphous type titanium oxide into anatase type titanium dioxide.

### (6.3) Vacuum film formation method

Titanium oxide is evaporated on the surface of a substrate by a resistance heating system vacuum evaporation method, an electron beam heating system, an ion plating method, an ion beam assisted vacuum evaporation method or a sputtering method to form an amorphous type titanium oxide layer. Then, the resulting is subjected to calcinations at a temperature higher than a crystallization temperature of the anatase to phase-change the amorphous type titanium oxide into anatase type titanium dioxide. Among the vacuum evaporation methods, in the case of each of various chemical vapor deposition methods, an anatase type titanium dioxide photocatalyst layer can be prepared without conducting calcination.

### (6.4) Tetrafunctional silane method

After a mixture in which the anatase type titanium dioxide sol and tetra alkoxy silane (tetraethoxy silane, tetrapropoxy silane, tetrabutoxy silane, tetramethoxy silane or the like) are mixed is coated on the surface of a substrate by a commonly known coating method such as a gravure coating method, a reverse coating method, a die coating method or the like, and is subjected to hydrolysis to form silanol, silanol thereof is subjected to dehydrocondensation polymerization.

### (6.5) Spray coating

One in which titanium dioxide prepared as anatase type titanium dioxide via processing and an inorganic or specially organic binder are mixed is evenly coated via spraying.

### (7) Gas barrier layer

The gas barrier layer is provided in cider to suppress degradation of a resin substrate, various functional elements to be protected by the resin substrate and so forth, specifically caused by high humidity, but those having specific function and application are allowed to be used, and various kinds of gas barrier layers can be formed as long as the above-described features are maintained. In the present invention, a gas barrier layer is preferably provided on the upper side of the foregoing corrosion inhibitor layer.

A dampproof property of the gas barrier layer is preferably adjusted so as to make the dampproof property of the gas barrier layer to be a water vapor transmittance of 100 g/m²·day/µm or less; preferably 50 g/m²·day/µm or less; and more preferably 20 wm²·day/µm or less at 40 °C and 90%RH. Further, an oxygen transmittance of 0.6 ml/m²/day/atm or less at 23 °C and 90%RH is preferable.

As to a gas barrier layer, a method of forming the gas barrier layer is not specifically limited, but preferably used is a method of forming an inorganic oxide film via heating of a carting film after coating a ceramic precursor for the inorganic oxide film.

### (7.1) Ceramic precursor

The gas barrier layer can be formed via application of a conventional heating method after coating a ceramic precursor to form an inorganic oxide film via heating, but is preferably formed via local heating. The ceramic precursor is preferably an organometallic compound or polysilazane.

### (7.2) Organometallic compound

An organometallic compound preferably contains at least one element selected from the group consisting of silicon (Si), aluminum (Al), lithium (Li), zirconium (Zn), titanium (Ti), tantalum (Ta), zinc (Zn), barium (Ba), indium (In), Tin (Sn), lanthanum (La), yttrium (Y), and niobium (Nb). Specifically, the organometallic compound more preferably contains at least one element selected from the group consisting of silicon (Si), aluminum (Al), lithium (Li), zirconium (Zr), titanium (Ti), zinc (Zn), and barium (Ba). Further, the organometallic compound still more preferably contains at least one element selected from the group consisting of silicon (Si), aluminum (Al), and lithium (Li).

The organometallic compound may be one capable of hydrolysis, and is not specifically limited, but a metal alkoxide is exemplified as a preferable organometallic compound.

The foregoing metal alkoxide is represented by the following Formula (I).

Formula (I) : MR²ₘ(OR¹)ₙ₋ₘ

In General Formula (I), M represents a metal with respect to an oxidation number of n; R¹ and R² each independently represent an alkyl group; m represents an integer of 0 to (n-1); R¹ and R² may be identical to each other, and may be different from each other, R¹ and R² each preferably represent an alkyl group having 4 carbon atoms or less, and for example, more preferably represent a lower alkyl group such as a methyl group CH₃ (hereinafter, referred to as Me), an ethyl group C₂H₅ (hereinafter, referred to as Et), a propyl group C₃H₇ (hereinafter, referred to as Pr), an isopropyl group i-C₃H₇ (hereinafter, referred to as i-Pr), a butyl group C₄H₉ (hereinafter, referred to as Bu), an isobutyl group i-C₄H₉ (hereinafter, referred to as i-Bu), or the like.

Preferable examples of metal alkoxide represented by the foregoing General Formula (I) include lithium ethoxide LiOEt, niobium ethoxide Nb (OEt)₅, Magnesium isopropoxide Mg (OPt-i)₂, aluminum isopropoxide Al (OPr-i)₃, zinc propoxide Zn (OPr)₂, tetraethoxy silane Si (OEt)₄, titanium isopropoxide Ti (OPr-i)₄, Barium ethoxide Ba (OEt)₂, Barium isopropoxide Ba (OPr-i)₂, triethoxy borane B (OEt)₃, zirconium propoxide Zn (OPr)₄, lanthanum propoxide La (OPr)₃, Yttrium propoxide Y (OPr)₃, lead isopropoxide Pb (OPr-i)₂, and so forth. Any of these metal alkoxides is commercially available, and can be easily purchased in the market. As to the metal alkoxide, a low condensate thereof obtained via partial hydrolysis is also commercially available, and the low condensate is possible to be used as raw material.

### (7.3) Inorganic oxide

An inorganic oxide is preferably formed from sol for which the above-described organometallic compounds is used as raw material, via local heating. Accordingly, it is a feature that the inorganic oxide is oxide of an element such as silicon (Si), aluminum (Al), zirconium (Zn), titanium (Ti), tantalum (Ta), zinc (Zn), barium (Ba), indium (In), Tin (Sn), niobium (Nb) or the like, which is contained in the organometallic compound.

Examples thereof include silicon oxide, aluminum oxide, zirconium oxide and so forth. Of these, silicon oxide is preferable.

In the present invention, as a method of forming inorganic oxide from an organometallic compound, preferably used are a so-called sol-gel method, and a method of coating polysilazane.

### (7.4) Sol-gel method

"Sol-gel method" is referred to as a method by which after an organometallic compound is subjected to hydrolysis or the like to obtain sol, and subjected to a dehydration treatment to obtain gel, this gel is further subjected to a heat treatment to prepare metal oxide glass in a certain shape (film shape, particle shape, fiber shape, or the like). Multicomponent system metal oxide glass is possible to be obtained by a method by which a plurality of different sol solutions are mixed, a method by which other metal ions are added therein, or the like.

Inorganic oxide is preferably prepared by a sol-gel method possessing the following steps.

That is, it is more preferably prepared by a sol-gel method possessing a step in which an organometallic compound is subjected to hydrolysis and dehydrocondensation while adjusting a pH to 4.5 - 5.0 in reaction liquid containing at least water and an organic solvent, in the presence of boron ions employing halogen ions as a solvent to obtain a reaction product, and another step in which the reaction product is subjected to heating at a temperature of 200 °C or less to prepare glass, since micropores caused by a heat treatment at high temperature are not generated, and deterioration of films and so forth do not occur.

In the case of the foregoing sol-gel method, an organometallic compound used as raw material may be one for which hydrolysis is possible to be carried out, and is not specifically limited, but the foregoing metal alkoxide is exemplified as a preferable organometallic compound.

In the above-described sol-gel method, the organometallic compound may be used as it is for reaction, but preferably be diluted with a solvent and used for making the reaction control to be easy. The diluting solvent can dissolve the foregoing organometallic compound, and may be one capable of evenly being mixed with water. As such a diluting solvent, provided are aliphatic lower alcohols, and preferable examples thereof include methanol, ethanol, propanol, isopropanol, butanol, isobutanol, ethylene glycol, propylene glycol, and a mixture thereof Further, a solvent in which butanol, and butyl cellosolve are mixed, a solvent in which xylol, cellosolve acetate, methyl isobutyl ketone and cyclohexane are mixed, and so forth are also usable.

In cases where metal in the foregoing organometallic compound is Ca, Mg, Al or the like, since hydroxide is produced via reaction with water in the reaction liquid, and carbonate is produced in the presence of carbonate ion CO₃²⁻, resulting in a precipitate, it is preferable to add an alcohol solution of triethanol amine as a masking reagent into the reaction liquid. The organometallic compound to be mixed and dissolved in a solvent preferably has a concentration of 70% by weight or less, but is more preferably diluted in the range of 5 - 70% by weight to use it.

The reaction liquid used in the foregoing sol-gel method contains at least water and an organic solvent. The foregoing organic solvent may be one to produce a homogeneous solution with water, or acid as well as alkali, and conventionally, the same one as each of aliphatic lower alcohols used for diluting the foregoing organometallic compound is preferably cited. Among the foregoing aliphatic lower alcohols, propanol, isopropanol, butanol and isobutanol each having a large numbe of carbon atoms are preferable. This is because growth of metal oxide glass to be produced is stable. A water concentration of 0.2 - 50 mol/L is preferable as a water ratio.

In the foregoing sol-gel method, an organic metal compound is hydrolyzed in the foregoing reaction liquid in the presence ofboron ions employing halogen ions as a catalyst As compounds each to release the foregoing boron ion B³⁺, preferably cited is trialkoxy borane B (OR)₃. Among those, triethoxy, borane B (OEt)₃ is more preferable. Further, the B³⁺ion concentration in the foregoing reaction liquid is preferable in the range of 1.0 -10.0 mol/L.

As the foregoing halogen ions, preferably cited are fluorine ions and/or chlorine ions. That is, fluorine ions may be only used, and chlorine ions may be also only used, but a mixture of those ions may be also used. The compound to be used is one in which fluorine ions and/or chlorine ions are produced in the above-described reaction liquid, and preferable examples of a fluorine ion source include ammonium hydrogen fluoride NH₄HF · HF, sodium fluoride NaF and so forth, and preferable examples of a chlorine ion source include ammonium chloride NH₄Cl and so forth.

The foregoing concentration of halogen ions in the reaction liquid is different, depending on thickness of a film made from an inorganic composition having an inorganic matrix to be produced, and other conditions, but it is generally 0.01-2 mol/kg, and preferably 0.002-0.3 mol/kg based on the total weight of the foregoing reaction liquid containing a catalyst. When concentration of halogen ions is lower than 0.001 mol/kg, it is difficult to sufficiently hydrolyze the organometallic compound, resulting in difficulty of film formation. On the other hand, when concentration of halogen ions exceeds 2 mol/kg, any of the causes is not preferable since the inorganic matrix (metal oxide glass) to be produced is easy to become inhomogeneous.

In addition, when boron having been used during reaction is contained as a B₂O₃ component in a composition designed for an inorganic matrix to be obtained, a product material may be prepared by adding a calculated amount of an organic boron compound in accordance with the boron content, and when it is desired to remove boron therefrom, boron can be vaporized as boron methyl ester to remove it by heating it in the presence of methanol as a solvent, or via immersion into the methanol, after film formation.

In the case of the step in which an organometallic compound is subjected to hydrolysis and dehydrocondensation to obtain a reaction product, after a base component solution in which a predetermined amount of the foregoing organometallic compound is mixed and dissolved in a mixed solvent containing predetermined amounts of water and organic solvent, and a predetermined amount of reaction liquid containing a predetermined amount of the halogen ions are mixed at a predetermined ratio while sufficiently stirring to prepare a homogeneous reaction solution, a pH of the reaction solution is adjusted to a desired value with acid or alkali, accelerating the reaction via ripening for a few hours to obtain the reaction product. A predetermined amount of the foregoing boron compound is mixed and dissolved in a base component solution or reaction liquid in advance. Further, when alkoxy borane is used, it is advantageous that the alkoxy borane is dissolved in abase component solution together with another organometallic compound.

A pH of the foregoing reaction solution is selected depending on the objective, and when it is intended to form a film made from an inorganic composition possessing an inorganic matrix (metal oxide glass), for example, it is preferable that a pH is adjusted to the range of 4.5-5 employing an acid such as a hydrochloric acid or the like, and ripening is carried out In this case, for example, it is useful to employ one in which Methyl Red and Bromocresol Green are mixed as an indicator.

In addition, the foregoing sol-gel method can be simply continued by additionally adding a base component solution and a reaction solution (including B3+ and halogen ions) having the same component and the same concentration sequentially at the same ratio while adjusting a pH to the predetermined pH to prepare a reaction product. The concentration of the foregoing reaction solution can be varied in the range of ± 50% by weight, the concentration of water (including acid or alkali) can be varied in the range of ± 30% by weight, and the concentration of halogen ions can be varied in the range of ± 30% by weight.

Next, a reaction product (a reaction solution after ripening) obtained in the preceding process is heated to a temperature of 200 °C or less, followed by drying to prepare glass. In the case of heating, temperature is carefully elevated gradually in the range of specifically 50-70 °C, and it is preferable that temperature is further elevated after conducting a preliminary drying (solution sublimation) step. In cases where films are formed, this drying step is to be carried out to result in preparation of a nonporous film. Temperature at which heating and drying are conducted after the preliminary drying step is preferably 70 -150 °C, and more preferably 80 -130 °C.

### (7. 5) Method of coating polysilazane

The gas barrier layer of the present invention preferably contains inorganic oxide formed by locally heating a coating film after coating a ceramic precursor to form an inorganic oxide film via heating.

When the ceramic precursor contains polysilazane, a resin substrate is coated with a solution in which polysilazane represented by the following Formula (II) and a catalyst in an organic solvent, if desired, are contained, and this solvent was vaporized and removed to leave a polysilazane layer having a layer thickness of 0.05 - 3.0 µm on the resin substrate. Then, the above-described polysilazane layer is subjected to locally heating in the presence of oxygen, active oxygen, and nitrogen in some cases, in the atmosphere containing water vapor, and it is preferable to utilize a method of forming a glass-like transparent coating film on the resin substrate.

Formula (II) : -(SiR₁R₂-NR₃)ₙ-,

where R¹, R² and R³ are identical to each other, or are different from each other, and independently to each other represent a group selected from the group consisting of hydrogen or a substituted alkyl group in some cases, an aryl group, and a vinyl group or (trialkoxysilyl) alkyl group; or preferably from the group consisting of hydrogen, methyl, ethyl, propyl, iso-propyl, butyl, iso-butyl, tert-butyl, phenyl, vinyl or 3-(triethoxysilyl) propyl and 3-(trimethoxysily]propyl); and in this case, n represents an integer wherein the n is set in such a way that the polysilazane has a number average molecular weight of 150 - 150,000 g/mol. Preferably usable examples of the catalyst include basic catalysts specifically such as N,N-diethyl ethanol amine, N, N-dimethyl ethanol amine, triethanol amine, triethyl amine and 3-morpholmopropyl amine, or N-heterocyclic compounds. The catalyst generally has a concentration of 0.1-10 mol%, and preferably has a concentration of 0.5-7 mol%, based on polysilazane.

In a preferred embodiment, employed is a solution containing perhydropolysilazane in which R¹, R² and R³ each are hydrogen atom.

In another preferred embodiment, the coating in the present invention possesses at least one polysilazane represented by the following Formula (III).

Formula (III): -(SiR₁R₂-NR₃)ₙ-(SiR₄R₅-NR₆)ₚ-,

where R¹, R²,R³, R⁴, R⁵ and R⁶ independently to each other represent hydrogen or a substituted alkyl group in some cases, an aryl group, a vinyl group or (trialkoxysilyl) alkyl group; and in this case, n and p each represent an integer wherein the n is set in such a way that the polysilazane has a number average molecular weight of 150 -150,000 g/mol.

Specifically preferable are a compound in which R¹, R³ and R⁶ each represent hydrogen, and R², R⁴ and R⁵ each represent methyl; a compound in which R¹, R³ and R⁶ each represent hydrogen, R² and R⁴ each represent methyl; and R⁵ represents vinyl; and a compound in which R¹, R³, R⁴ and R⁶ each represent hydrogen, R² and R⁵ each represent methyl.

Further, similarly preferable is a solution containing at least one polysilazane represented by the following Formula (IV).

Formula (IV) : -(SiR₁R₂-NR₃)ₙ-(SiR₄R₅-NR₆)ₚ-(SiR₇R₈-NR₉)_{q}-,

, where R¹, R²,R³, R⁴, R⁵, R⁶, R⁷, R⁸ and R⁹ independently to each other represent hydrogen or a substituted alkyl group in some cases, an aryl group, a vinyl group or (trialkoxysilyl) alkyl group; and in this case, n, p and q each represent an integer wherein the n is set in such a way that the polysilazane has a number average molecular weight of 150 -150,000 g/mol.

Specifically preferable is a compound in which R¹, R³ and R⁶ each represent hydrogen; R², R⁴, R⁵ and R⁸ each represent methyl; R⁹ represents (triethoxysilyl) propyl; and R⁷ represents alkyl or hydrogen.

The polysilazane in a solvent generally has a content of 1- 80% by weight; preferably has a content of 5 - 50% by weight; and more preferably has a content of 10 - 40% by weight.

The solvent does not contain water and a reactive group (for example, a hydroxyl group or an amine group) and is inactively organic with respect to polysilazane, and an aprotic solvent is preferable as the solvent. Examples thereof include aliphatic or aromatic hydrocarbon, halogen hydrocarbon, ester such as ethyl acetate or butyl acetate, ketone such as acetone or methylethyl ketone, ether such as tetrahydrofuran or dibutyl ether, or mono or polyalkylene glycol dialkyl ether (diglymes), and a mixture formed from a solvent thereof.

An additional component for the above-described polysilazane solution can be a binder different from those conventionally used for preparation of a coating material. Examples thereof include cellulose ether and cellulose ester such as ethyl cellulose, nitro cellulose, cellulose acetate or cellulose acetobutylate, a natural resin such as rubber or a rosin resin, or synthetic resins such as polymerization resins or condensation resins, for examples, aminoplast, specifically a urea resin, a melamine formaldehyde resin, an alkyd resin, an acrylic resin, polyester or modified polyester, epoxide, polyisocyanate or blocked polyisocyanate, orpolysiloxane.

Further, other components of the polysilazane concoction may be additives influencing viscosity of the concoction, wettability of a base material, film formation, lubrication action, evacuation or the like, or inorganic particles each made of SiO₂, TiO₂, ZrO₂, or Al₂O₃.

A closely dense glass-like layer exhibiting excellently high barrier action with respect to gas because of no presence of cracks and pores can be prepared by a method of the present invention.

The coating film to be formed is preferably set to have a thickness of 100 nm to 2 µm.

### (8) Metal layer

As a metal layer relating to the present invention, one exhibiting higher ionization tendency than that of silver should be used in an embodiment where it is adjacent to silver, since the metal layer has a sacrificial corrosion protection function. Preferable examples thereof include lithium, cesium, rubidium, potassium, barium, strontium, calcium, sodium, magnesium, aluminum, manganese, tantalum, zinc, chromium, iron, cadmium, cobalt, nickel, tin, lead, antimony, bismuth, copper, mercury and so forth. Specifically, aluminum, zinc, iron, tin and copper are preferable. Of these, copper and tin are more preferable.

As a method of manufacturing the metal layer, the metal layer may be formed by a wet method collectively designated by a plating method, or the foregoing vacuum film formation method may be used.

The metal layer has a film thickness of 10 - 500 nm; preferably has a film thickness of 50 - 300 nm; and more preferably has a film thickness of 100 - 200 nm in view of sacrificial corrosion protection to silver.

### (9) UV absorbent layer

In the present invention, a UV absorbent can be added in order to avoid degradation caused by sunlight and UV radiation. It is preferable that a UV absorbent layer containing a UV absorbent is formed on the foregoing resin substrate, or a UV absorbent is contained in any one of constituting layers provided on the foregoing resin substrate.

Examples of UV absorbents include benzophenone based UV absorbents, benzotriazole based UV absorbents, phenyl salicylate based UV absorbents, triazine based UV absorbents, and so forth.

Examples of benzophenone based UV absorbents include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, 2, 2', 4,4''-tetrahydroxy-benzophenone, and so forth

Examples of benzotriazole based UV absorbents include 2-(2'-hydroxy-5-methylphenyl) benzotriazole, 2-(2'-hydroxy-3' 5'-di-t-butylphenyl) benzotriazole, 2-(2'-hydroxy-3'-t-butyl-5'-methylphenyl) benzotriazole, and so forth.

Examples ofphenyl salicylate based UV absorbents include phenyl salicylate, 2-4-di-t-butylphenyl-3,5-di-t-butyl-4-hydroxybenzoate, and so forth. Examples of hindered amine based UV absorbents include bis (2,2,6,6-tetramethyl piperidine-4-yl) sebacate, and so forth.

Examples of triazine based UV absorbents include 2,4-diphenyl-6-(2-hydroxy-4-methoxyphenyl)-1, 3, 5-triazim 2, 4-diphenyl-6-(2-hydroxy-4-ethoxyphenyl)-1, 3, 5-triazine, 2,4-diphenyl-(2-hydroxy-4-propoxyphenyl)-1, 3, 5-triazine; 2,4-diphenyl-(2-hydroxy-4-butoxyphenyl)-1, 3,5-triazine; 2, 4-diphenyl-6-(2-hydroxy-4-butoxyphenyl)-1, 3, 5-triazine; 2, 4-diphenyl-6-(2-hydroxy 4-hexyloxyphenyl)-1, 3, 5-triazine; 2, 4-diphenyl-6-(2-hydroxy-4-octyloxypheny])-1, 3, 5-triazine-, 2, 4-diphenyl-6-(2-hydroxy-4-dodecyloxyphenyl)-1, 3, 5-triazine; 2, 4-diphenyl-6-(2-hydroxy-4-benzyloxyphenyl)-1, 3, 5-triazine; and so forth.

The UV absorbent contains a compound having a function through which energy possessed by UV radiation in addition to the above-described is converted into oscillation energy in the molecule, and the oscillation energy is released as thermal energy or the like. Further, a light stabilizer or the like which acts like an optical energy conversion agent, called one producing an effect via use of an antioxidant, a colorant or the like in combination, or called quencher can be used in combination. However, in cases where the above-described UV absorbent is used, one in which a light absorption wavelength of a UV absorbent does not overlap an effective wavelength of a photopolymerization initiator should be chosen.

In cases where a conventional UV absorbent is used, it is effective to use a photopolymerization initiator in which radicals are generated by visible light.

A consumption amount of the UV absorbent is 0.1-20% by weight; preferably 1-15% by weight; and more preferably 3 -10% by weight In the case of a consumption amount of 20% or less, adhesion is excellent, and in the case of a consumption amount of 0.1 % or more, a weather resistance improving effect is largely produced. (10) Total thickness of film mirror

A film mirror relating to the present invention preferably has a total thickness of 75 - 250 µm; more preferably has a total thickness of 90 - 230 µm; and still more preferably has a total thickness of 100 - 220 µm in view of prevention of deflection of the mirror, regular reflectance, handling and so forth.

### (11) Reflection device for solar heat power generation

The film mirror having a structure as described above is usable for a reflection device for solar heat power generation. The reflection device for solar heat power generation mainly possesses a metal substrate and a film mirror, and preferably utilized is a structure in which the film mirror is attached onto the metal substrate.

Usable examples of metal substrates include a steel plate, a copper plate, an aluminium plate, an aluminum plated steel plate, an aluminum system alloy plated steel plate, a copper plated steel plate, a tin plated steel plate, a chromium plated steel plate, and a metallic material exhibiting high thermal conductivity such as a stainless steel plate or the like.

When manufacturing the reflection device for solar heat power generation, an adhesion layer is coated on one surface of a resin substrate. The adhesion layer is coated on the surface on the side opposite to the resin substrate surface on the side of a silver reflection layer formed on the resin substrate. Then, a film mirror is attached onto a metal substrate via the adhesion layer.

The configuration of an adhesion layer is not specifically limited, and for example, any of a dry laminate agent, a wet laminate agent, an adhesion agent, a heat sealing agent, a hot melt agent and so forth is usable. For example, polyester based resins, urethane based resins, polyvinyl acetate based resins, acrylic resins, nitrile rubber and so forth are used for the adhesion layer.

### EXAMPLE

Next, the present invention will be specifically described referring to Examples and Comparative examples.

### (1) Preparation of sample

### (1.1) Comparative example 1

A biaxially stretched polyester film (made from polyethylene terephthalate, and having a thickness of 100 µm) was used as resin substrate 1a. A mixture in which lanthanum oxide and aluminum oxide were mixed at a ratio of 8 : 2 was evaporated on one surface of the polyethylene terephthalate film via a vacuum evaporation method so as to give a thickness of 60 nm, and a 100 nm thick copper layer was subsequently formed as metal layer 2 by a vacuum evaporation method. Similarly to this, silver reflection layer 3 was evaporated so as to give a thickness of 150 nm.

Next, after glycol dimercapto acetate was mixed in a resin in which a polyester based resin and TDI (tolylene diisocyanate) based isocyanate were mixed at a resin solid content ratio of 10 : 2, an amount having been adjusted so as to give 0.3 g/m² was added and coated on silver reflection layer 3 by a gravure coating method, and corrosion inhibitor layer 4a having a thickness of 1 µm was formed to obtain a sample as Comparative example 1.

### (1.2) Comparative example 2

A sample as Comparative example 2 was prepared similarly to preparation of Comparative example 1, except that Pure Coat AN-H (produced by PIALEX TECHNOLOGIES CORP.) in place of glycol dimercapto acetate as a sample obtained in Comparative example 1 was spray-coated to form layer 5 containing a photocatalyst.

### (1.3) Comparative example 3

Benzotriazole as a UV absorbent was contained in a resin in which a polyester based resin and TDI (tolylene diisocyanate) based isocyanate were mixed at a resin solid content ratio of 10 : 2 so as to give 0.5 g/m², and the resulting one was coated on the outermost layer in a sample obtained in Comparative example 1 to form UV absorbent layer 6 having a thickness of 1 µm. Thus, a sample as Comparative example 3 was prepared.

### (1.4) Example 1

A biaxially stretched polyester film (made from polyethylene terephthalate, and having a thickness of 100 µm) was used as resin substrate 1a A mixture in which lanthanum oxide and aluminum oxide were mixed at a ratio of 8 : 2 was evaporated on one surface of the polyethylene terephthalate film via a vacuum evaporation method so as to give a thickness of 60 nm, and a 100 nm thick copper layer was subsequently formed as metal layer 2 by a vacuum evaporation method. Similarly to this, silver reflection layer 3 was evaporated so as to give a thickness of 150 nm.

Then, glycol dimercapto acetate was mixed in a resin in which a polyester based resin and TDI based isocyanate were mixed at a resin solid content ratio of 10 : 2, an amount having been adjusted so as to give 0.3 g/m² was added and coated on silver reflection layer 3 by a gravure coating method to form corrosion inhibitor layer 4a having a thickness of 1 µm.

Subsequently, Pure Coat AN-H (produced by PIALEX TECHNOLOGIES CORP.) was spray-coated to form layer 5 containing photocatalyst, which has a thickness of 100 nm, as an outermost layer. Thus, a sample as Example 1 was obtained.

### (1.5) Example 2

In dibutyl ether, used was a 3% of perhydropolysilazane solution (NL 120, produced by CLARIANT), and the resulting was bar-coated so as to give a dry film thickness of 100 nm, followed by naturally drying for 3 minutes and subsequently annealing in an oven at 70 °C for 30 minutes to form gas barrier layer 7 between corrosion inhibitor layer 4a is a sample as Example 1 and layer 5 containing photocatalyst. Thus, a sample as Example 2 was prepared.

### (1.6) Example 3

A sample as Example 3 was prepared by the same method as in Example 2, similarly to preparation of Example 2, except that 1 g/m² of 2.2'-methylene bis (4,6-di-t-butylphenyl) octyl phosphite was added in place of glycol demercapto acetate in Example 2 to form corrosion inhibitor layer 4b.

### (1.7) Example 4

Benzotriazole as a UV absorbent was contained in a resin in which a polyester based resin and TDI (tolylene diisocyanate) based isocyanate were mixed at a resin solid content ratio of 10 : 2 so as to give 0.5 g/m², and the resulting was coated by a gravure coating method to form UV absorbent layer 6 having a thickness of 1 µm between gas barrier layer 7 in Example 2 and layer 5 containing photocatalyst. Thus, a sample as Example 4 was prepared.

### (1.8) Example 5

A sample as Example 5 was prepared by the same method as in Example 4, similarly to preparation of Example 4, except that a polyester film as a sample in Example 4 was replaced by a polyethylene terephthalate film having a thickness of 175 µm as resin substrate 1b.

### (2) Evaluation of sample

As to the resulting samples (film mirrors) each described above, regular reflectance and weather resistance, and UV resistance were measured by the following methods.

### (2.1) Measurement of regular reflectance

A spectrophotometer "UV 265" manufactured by Shimadzu Corporation equipped with an integrating sphere reflection accessory device was remodeled, and adjusted so as to make an incident angle of incident light to be 5° with respect to a normal line to the reflecting plane to measure regular reflectance at a reflecting angle of 5°. As to evaluations, it was measured as mean reflectance at a wavelength of 350~2500 nm.

### (2.2) Weather resistance test of regular reflectance

Regular reflectance of a film mirror after its being left standing for 30 days at a temperature 85° and a humidity of 85%RH while exposing it to light from a Xenon lamp was measured by the same method as in the above-described light reflectance measurement, and a regular reflectance falling rate at the situations before and after conducting an enforced degradation test was calculated from a regular reflectance of the film mirror before the enforced degradation, and another regular reflectance of the film mirror after the enforced degradation.

The evaluation criteria (levels) of weather resistance test will be described below.
5: A regular reflectance falling rate of less than 5%
4: A regular reflectance falling rate of at least 5% and less than 10%
3: A regular reflectance falling rate of at least 10% and less than 15%
2: A regular reflectance falling rate of at least 15% and less than 20%
1: A regular reflectance falling rate of at least 20%

### (2.3) Light resistance test of regular reflectance

After the resulting samples each were exposed to UV radiation at 65 °C for 7 days, regular reflectance was measured by the above-described method employing EYE Super UV Tester manufactured by IWASAKI Electric Co., Ltd. to calculate a falling rate of the regular reflectance before and after the samples each were exposed to UV radiation.

Evaluation criteria (levels) of light resistance test are described below.
5: A regular reflectance falling rate of less than 5%
4: A regular reflectance falling rate of at least 5% and less than 10%
3: A regular reflectance falling rate of at least 10% and less than 15%
2: A regular reflectance falling rate of at least 15% and less than 20%
1: A regular reflectance falling rate of at least 20%

### (2.4) Contact angle test

Since a hydrophilicity surface is formed by exposing a photocatalyst layer to UV radiation, after exposing each sample to UV radiation for 30 minutes employing the foregoing UV tester, a contact angle at a time when 3 µl water was dropped was measured employing a contact angle meter DM 300 (manufactured by Kyowa Interface Science Co., Ltd.) in accordance with JIS-R3257. Those each having a small contact angle exhibit high hydrophilicity, whereby they each exhibit excellent an antifouling property.

The configuration of each of the resulting film mirrors are shown in the following Table 1, and results obtained by evaluating properties are shown in the following Table 2.

Further, Fig.1 is a drawing showing schematic layer structures possessed by samples corresponding to Examples of the present invention, and Comparative examples thereof. The schematic layer structures possessed by samples corresponding to Comparative examples 1, 2 and 3 and Examples 1, 2, 3, 4 and 5 are designated by SR1, SR2 and SR3, and S1, S2, S3, S4 and S5, respectively.

**Table 1**

| Sample | Resin substrate thickness (µm) | Corrosion inhibitor layer | Photocatalyst layer | UV absorbent layer | Gas barrier layer |
|---|---|---|---|---|---|
| Comparative example 1 | 100 | Silver absorptive corrosion inhibitor | - | - | - |
| Comparative example 2 | | - | Provided | - | - |
| Comparative example 3 | | Silver absorptive corrosion inhibitor | - | Provided | - |
| Example 1 | 100 | Silver absorptive corrosion inhibitor | Provided | - | - |
| Example 2 | | | | | Provided |
| Example 3 | | Antioxidant | | | |
| Example 4 | | Silver absorptive corrosion inhibitor | | Provided | |
| Example 5 | 175 | | | Provided | |

**Table 2**

| Sample | Regular reflectance (%) | Weather resistance (Level) | Light resistance (Level) | Contact angle (°) |
|---|---|---|---|---|
| Comparative example 1 | 94 | 2 | 1 | 93 |
| Comparative example 2 | | | 2 | 8 |
| Comparative example 3 | | 3 | 3 | 75 |
| Example 1 | 94 | 3 | 4 | 7 |
| Example 2 | 93 | 5 | | |
| Example 3 | | | | |
| Example 4 | | | 5 | |
| Example 5 | 94 | | | |

### (3) Summary

As is clear from evaluation results shown in Table 2, it is to be understood that each of properties in Examples of the present invention is superior to that of any of Comparative examples.

The sample in Comparative example 1 specifically exhibits inferior light resistance and contact angle to those of the present invention, since no photocatalyst layer is formed in the sample.

The sample in Comparative example 2 specifically exhibits inferior weather resistance to that of the present invention, since no corrosion inhibitor layer is formed in the sample.

The sample in Comparative example 3 exhibits neither superior results of light resistance and contact angle, nor superior results of light resistance to those of the present invention.

In contrast, each of the samples in Examples 1, 2, 3, 4 and 5 exhibits superior property of any of weather resistance, light resistance and contact angle to that of each Comparative example, since a corrosion inhibitor and a photocatalyst layer are formed together.

From those described above, it is to be understood that with the foregoing structures of the present invention, provided can be a lightweight and flexible film mirror exhibiting excellent reflectance to sunlight for a long duration together with excellent weather resistance and an excellent antifouling property, and can be large-area-produced and mass-produced at low manufacturing cost in addition to inhibition of a decline of regular reflectance caused by degradation of a silver reflection layer.

### EXPLANATION OF NUMERALS

- 1a, 1b: Resin substrate
- 2: Metal layer
- 3: Silver reflection layer
- 4a, 4b: Corrosion inhibitor layer
- 5: Layer containing photocatalyst
- 6: UV absorbent
- 7: Gas barrier layer

## Claims

1. A film minor comprising a resin substrate and provided thereon, a silver reflection layer, a corrosion inhibitor layer and an outermost layer,
wherein the corrosion inhibitor layer adjacent to the silver reflection layer is provided on a light reflection side of the silver reflection layer to prevent silver from corrosion, and the outermost layer comprises a photocatalyst.

2. The film mirror of Claim 1,
wherein a corrosion inhibitor in the corrosion inhibitor layer comprises an adsorptive group to silver.

3. The film mirror of Claim 1,
wherein a corrosion inhibitor in the corrosion inhibitor layer comprises an antioxidant.

4. The film mirror of any one of Claims 1- 3, comprising a metal layer adjacent to the silver reflection layer, provided between the resin substrate and the silver reflection layer,
wherein the metal layer comprises copper or zinc as metal exhibiting higher ionization tendency than that of silver.

5. The film mirror of Claim 4, comprising an adhesion layer provided between the resin substrate and the silver reflection layer, or between the resin substrate and the metal layer to maintain material-to-material adhesion.

6. The film mirror of any one of Claims 1- 5, comprising a gas barrier layer provided on an upper side of the corrosion inhibitor layer.

7. The film mirror of any one of Claims 1- 6, comprising a UV absorbent layer provided on an upper side of the corrosion inhibitor layer, or comprising constituting layers provided on the resin substrate wherein any one of the constituting layers comprises a UV absorbent.

8. The film mirror of any one of Claims 1 - 7,
wherein an entire layer comprising the resin substrate has a total thickness of 75 -250 µm.

9. A method of manufacturing the film mirror of any one of Claims 1- 8, comprising the step of:
forming the silver reflection layer via evaporation of silver.

10. A reflection device for solar heat power generation, comprising the film mirror of any one of Claims 1 - 8 or a film mirror, obtained by the method of Claim 9,
wherein the reflection device comprises a metal substrate and attached thereon, the film mirror provided via an adhesion layer coated on a surface of the resin substrate on a side where the silver reflection layer is present, or another adhesion layer coated on an opposite surface of the resin substrate.
